Europäisches Patentamt

European Patent Office

Office européen des brevets

(11) Publication number: **0 412 640 B1**

# EUROPEAN PATENT SPECIFICATION

(45) Date of publication of patent specification: **09.11.94**  (51) Int. Cl.⁵: **C08L 27/06**, C08G 18/62

(21) Application number: **90306658.7**

(22) Date of filing: **19.06.90**

(54) **Vinyl chloride resin composition.**

(30) Priority: **09.08.89 JP 204813/89**

(43) Date of publication of application:
**13.02.91 Bulletin  91/07**

(45) Publication of the grant of the patent:
**09.11.94 Bulletin  94/45**

(84) Designated Contracting States:
**BE DE FR GB IT NL**

(56) References cited:
**EP-A- 0 323 197**
**FR-A- 2 284 638**

(73) Proprietor: **SUMITOMO BAKELITE COMPANY LIMITED**
**2-2, Uchisaiwaicho 1-chome**
**Chiyoda-ku**
**Tokyo 100 (JP)**

(72) Inventor: **Kobayashi, Takayasu**
**14-1 Yamamichi**
**Minamino, Itami-shi (JP)**
Inventor: **Yagi, Keisuke**
**19-21 Tenjinmachi-2-chome**
**Takasuki-shi (JP)**

(74) Representative: **Darby, David Thomas et al**
**Abel & Imray**
**Northumberland House**
**303-306 High Holborn**
**London WC1V 7LH (GB)**

## Description

The present invention relates to a vinyl chloride resin composition which provides shaped products of reduced surface tackiness.

In general, for a flexible vinyl chloride resin of less than 80 in hardness, a large proportion of plasticizer must be used and the plasticizer exudes from the surface of molded products, resulting in high tackiness when the surface is touched. The tackiness of a flexible vinyl chloride resin is extremely serious particularly for automobile parts such as the steering wheel, gear change knob and assist grip which are touched by hands very often. (Where hardness is referred to in this specification, it is measured according to JIS K6301, Type A).

As materials for interior trims of automobiles which are of less tackiness, a urethane resin has been used, but this resin suffers from the problems that its cost is high; color matching is difficult; a deflashing step is required; and the yield is low.

Furthermore, blends of ethylene-vinyl acetate resin with vinyl chloride resin have been proposed as flexible vinyl chloride materials in which no plasticizer is required, but these have the problems that their tackiness is high; they have strong odor; the heat stability is low; and a soft product cannot be produced. Blends of urethane resin with vinyl chloride resin have also been proposed, but these have the problems of high cost; tackiness; and a soft product can be produced only with difficulty.

Under the circumstances, the inventors have conducted intensive research in order to find a vinyl chloride resin composition free from the above-mentioned defects. As a result, it has been found that a vinyl chloride resin composition capable of providing shaped, especially molded, products of reduced surface tackiness may be obtained by adding a vinyl chloride resin having a polyvinyl chloride gel portion insoluble in tetrahydrofuran, and preferably a plasticizer, to a product obtainable by the reaction of a polyol-containing vinyl chloride polymer with an isocyanate compound. The present invention is based on this finding.

The present invention provides a vinyl chloride resin composition composed mainly of 100 parts by weight of a reaction product of a polyol-containing vinyl chloride polymer with an isocyanate compound, the urethane content in the reaction product being 30 to 60% by wt., 10 to 300 parts by weight of a vinyl chloride resin comprising 8 to 90% by weight of gel portion insoluble in tetrahydrofuran, the balance being tetrahydrofuran-soluble, and 0 to 200 parts by weight of a plasticizer.

The polyol-containing vinyl chloride polymer obtainable, and preferably obtained, by polymerizing vinyl chloride monomer in an aqueous medium in the presence of a polyol soluble in the vinyl chloride monomer and the isocyanate compound which are used in the present invention, are described below.

The polyols used to prepare the polyol-containing polymer may be a long or short chain polyol. Suitable short-chain polyols include, for example, aliphatic, alicyclic, aromatic, or heterocyclic dihydroxy, trihydroxy and tetrahydroxy compounds. Typical examples thereof are 1,2-ethanediol, 1,2-propanediol, 1,4-butanediol, butenediol, 1,6-hexanediol, 1,10-decamethylenediol, 2,5-dimethyl-2,5-hexanediol, neopentyl glycol, diethylene glycol, 1,4-cyclohexanedimethanol, bis($\beta$-hydroxyethoxy)benzene, p-xylenediol, dihydroxyethyl tetrahydrophthalate, trimethylolpropane, glycerol, 2-methylpropane-1,2,3-triol, 1,2,4-hexanetriol and pentaerythritol.

As long-chain polyols, there may be used, for example, polyester polyols, polyether polyols, polycarbonate polyols, vinyl polyols, diene polyols, castor oil polyols, silicone polyols, polyolefin polyols and copolymers thereof.

These long-chain polyols advantageously have a molecular weight of 300-10,000, preferably 500-8,000.

Polymerization methods employed for preparation of the polyol-containing PVC may be any of suspension polymerization, fine suspension polymerization and emulsion polymerization. The proportion of polyol is generally 200% by weight or less based on the weight of vinyl chloride monomer (hereinafter referred to as "VCM"). Polymerization may be carried out by a conventional method, namely, for example, using an ordinary polymerization autoclave at a temperature of 30 to 70°C, preferably 40 to 70°C.

The term "vinyl chloride polymer" used here means vinyl chloride homopolymers or copolymers having vinyl chloride as a main component with a monomer copolymerizable with vinyl chloride. As monomer compolymerizable with VCM, there may be cited, for example, vinylidene monomers, e.g., vinylidene chloride and vinylidene fluoride; esters of acrylic acid, e.g., methyl acrylate, ethyl acrylate, butyl acrylate, octyl acrylate, and cyanoethyl acrylate; esters of methacrylic acid, e.g., methyl methacrylate, ethyl methacrylate, and butyl methacrylate; styrene and styrene derivatives, e.g., methylstyrene, vinyltoluene, and chlorostyrene; vinyl monomers, e.g., acrylonitrile, ethylvinylbenzene, and vinylnaphthalene, and alkadiene monomers, e.g., butadiene, isoprene and chloroprene.

As the isocyanate compounds used in the present invention, there may be cited, for example, diisocyanates, e.g., 2,4- and 2,6-tolylene diisocyanates, m- and p-phenylene diisocyanates, 1-chlorophenylene-2,4-diisocyanate, 1,5-naphthalene diisocyanate, methylenebisphenylene-4,4-diisocyanate, m- and p-xylene diisocyanates, hexamethylene diisocyanate, lysine diisocyanate, 4,4-methylenebis-(cyclohexylisocyanate), isophorone diisocyanate, and trimethylhexamethylene diisocyanate; triisocyanates, e.g., 1,6,11-undecane triisocyanate, lysine ester isocyanate, and 4-isocyanate methyl-1,8-octamethylene diisocyanate; polyfunctional isocyanates, e.g., polyphenylmethane polyisocyanate; dimers and trimers of these isocyanates; and polyisocyanate compounds having terminal isocyanate groups which are obtained by reacting active hydrogen compounds, e.g., the above-mentioned short-chain and long-chain polyols, water and amino compounds with the above isocyanate compounds.

The urethane content in the reaction product of the polyol-containing vinyl chloride polymer and the isocyanate compound is 30 to 60% by weight, desirably 50 to 60% by weight. If the urethane content is more than 60% by weight, dispersion during polymerization becomes unstable and fine particles can be obtained only with difficulty and, in this case, particles of polymer are fused to each other during drying and satisfactory drying cannot be performed.

The expression "urethane content" used herein means the residue obtained after extracting plasticizer with n-hexane from the extraction residue which is obtained by extracting the reaction product of a polyol-containing vinylchloride polymer with an isocyanate compound by use of a Soxhlet's extractor with hot tetrahydrofuran for 20 hours and separating with a 350 mesh filter, according to JIS Z8801-1966.

The feature of the vinyl chloride resin used in the composition of the present invention is that the gel content is 8-90% by weight, preferably 8-80% by weight, which makes it possible to produce molded products of low permanent compression set. If the gel content in the vinyl chloride resin is less than 8% by weight, permanent compression set is not lower than 50%, and when the gel content is more than 90% by weight, permanent compression set is less than 50%, but knitting performance at kneading is inferior to cause problems in processing and in practical use such as inferior surface state of molded products. On the other hand, the remainder, tetrahydrofuran soluble portion has no special limitation. However, if average polymerization degree of the soluble portion is too high, there occur problems in processing such as necessity of melting at high temperature and high extrusion power. Furthermore, too low average polymerization degree brings about the state where the gel portion is filled merely as a filler and strength of molded products is reduced.

These vinyl chloride resins may be produced, for example, by any conventional process, e.g., one mentioned above, for the polymerization of vinyl chloride, but in the presence of a polyfunctional compound, for example, diallyl esters of phthalic acid, e.g., diallyl phthalate, diallyl isophthalate and diallyl terephthalate; diallyl esters of ethylenically unsaturated dibasic acids, e.g., diallyl maleate, diallyl fumarate and diallyl itaconate; diallyl esters of saturated dibasic acids, e.g., diallyl adipate, diallyl azelate and diallyl sebacate; diallyl ether, triallyl cyanurate, triallyl isocyanurate, and triallyl trimellitate, a divinyl ether, e.g., ethylene glycol divinyl ether, n-butanediol divinyl ether, decanedivinyl ether or octadecanedivinyl ether; dimethacrylates or diacrylates of polyhydric alcohols, e.g., ethylene glycol dimethacrylate, diethylene glycol dimethacrylate, triethylene glycol dimethacrylate, diethylene glycol diacrylate and triethylene glycol diacrylate; trimethacrylates or triacrylates of polyhydric alcohols, e.g., trimethylolpropane trimethacrylate, trimethylolethane trimethacrylate, trimethylolpropane triacrylate, trimethylolethane triacrylate and tetramethylolmethane triacrylate; bismethacryloyloxyethylene phthalate or 1,3,5-triacryloylhexahydrotriazine and then carrying out polymerization so that the desired amount of gel portion is produced, or a process which comprises polymerizing vinyl chloride with the above-mentioned polyfunctional compound to produce polyvinyl chloride gel and mixing this gel with a tetrahydrofuran-soluble vinyl chloride resin prepared by a conventional process.

The term "vinyl chloride resin" used here means vinyl chloride homopolymers and copolymers of vinyl chloride as a main component and a monomer copolymerizable therewith. As the monomer copolymerizable with vinyl chloride, there may be cited, for example, fatty acid vinyl esters, vinylidene halides, alkyl acrylates, alkyl methacrylates, acrylonitrile, alkylvinyl ethers, and styrene and derivatives thereof.

The term "tetrahydrofuran-insoluble gel portion" used herein means an extraction residue obtained by subjecting a vinyl chloride resin to extraction treatment with hot tetrahydrofuran for 22 hours using a Soxhlet's extractor and then subjecting the resin to separation by a 350 mesh filter (JIS Z8801).

If the amount of the vinyl chloride resin is less than 10 parts by weight, fine irregularities on the surface of molded products disappear and the surface lacks matte effect and improvement of tackiness is not obtained. If the amount is more than 300 parts by weight, content of urethane based on the whole composition decreases and hardness is not reduced unless plasticizer is used in a large amount and thus effect to improve tackiness is lost.

As examples of plasticizers, there may be cited alkyl esters of aromatic polybasic acids, e.g., dibutyl phthalate, dioctyl phthalate and dibutylbenzyl phthalate; alkyl esters of aliphatic polybasic acids, e.g., dioctyl

EP 0 412 640 B1

adipate, dioctyl azelate and dioctyl sebacate; aryl esters of phosphoric acid, e.g., tricresyl phosphate, and polyesters. Use of more than 200 parts by weight of plasticizer causes increase in tackiness.

The vinyl chloride resin composition of the present invention may be used as it is, but if necessary, it may further contain, for example, another thermoplastic resin, rubber, heat stabilizer, filler, pigment or processing aid.

The other thermoplastic resins include, for example, general purpose vinyl chloride resin, ethylene-vinyl acetate copolymer, ethylene-vinyl chloride copolymer, chlorinated polyethylene, ABS resin, polyester resin, AS resin, urethane resin and acrylic resin. The rubbers include, for example, NBR and CR.

The heat stabilizers include, for example, lead heat stabilizers, e.g., tribasic lead sulfate, tin stabilizers, e.g., dibutyltin maleate and metallic soaps, e.g., zinc stearate, calcium stearate and barium stearate. Addition amount of the stabilizer is generally 5 parts by weight or less per 100 parts by weight of urethane vinyl chloride copolymer.

The fillers include, for example, carbon black, calcium carbonate, titanium oxide, talc, mica, asbestos, aluminum hydroxide, and magnesium hydroxide. Addition amount of the filler is usually 100 parts by weight or less per 100 parts by weight of urethane vinyl chloride copolymer.

The pigments include, for example, color carbon black, chrome yellow, titanium oxide and Phthalocyanine Green. Addition amount thereof is generally 5 parts by weight or less per 100 parts by weight of urethane vinyl chloride copolymer.

As the processing aids, there may be used those which are usually employed for vinyl chloride resins , e.g., low molecular weight polyethylene and higher fatty acid esters.

The vinyl chloride resin composition of the present invention may be granulated by the same method as used for a conventional vinyl chloride resin. That is, the present resin composition is mixed with heat stabilizer, filler, pigment, processing aid and others by a mixer such as super mixer or blender and the mixture is kneaded and granulated by, for example, a Banbury mixer, mixing roll or extruder.

The resulting pellets may be subjected to injection molding, extrusion molding, blow molding, calendering, and compression molding like general flexible vinyl chloride resins, and the resulting molded products have good appearance like the general flexible vinyl chloride resins.

Uses of the vinyl chloride resin composition of the present invention are e.g., automobile interior trims such as handle, horn pad, change lever knob, armrest and assist grip, tube, hose covering material, and grip.

The composition of the present invention is of very high utility value in that molded products having little surface tackiness nearly the same as that of molded products obtained from urethane resins may be obtained by using the composition and besides that the composition is better in processability than urethane resins, is simple in color matching, may recycled and is low in cost.

The present invention is explained by the following examples and comparative examples. Amounts of components are shown in part by weight.


Examples 1-5 and Comparative Examples 1-4


To 100 parts by weight of a reaction product (DOMINUS K550F, K650F, K700F, K800F and K900F) of a polyol-containing vinyl chloride polymer with an isocyanate compound, which has urethane content of 30-60% by weight, were added 50 parts by weight of a vinyl chloride resin of 1000 in average polymerization degree which comprises 45% of tetrahydrofuran-insoluble polyvinyl chloride gel portion and the remainder of tetrahydrofuran-soluble portion, 60 parts by weight of 2-ethylhexyl phthalate plasticizer and 2 parts by weight of a Ba-Zn type heat stabilizer (Rup-14 manufactured by Adeka Argus Co.), and the mixture was kneaded by a roll at a roll temperature of 130°C to make pellets. A molded product of 2 mm in thickness, 50 mm in width and 70 mm in length was produced from the pellets by an injection molding machine. Tackiness of the surface of this molded product was evaluated by touch with hand and shown according to the following three grades.

○ :    Good
△ :    Somewhat bad
X :    Bad

Furthermore, a pressed sheet was made from the above pellets and hardness of this sheet was measured. Moreover, operability in preparing pellets was evaluated by sticking state of the mixture to roll in kneading by the roll. The results are shown in Table 1.

As shown in Table 1, molded products obtained in Examples 1-5 were less in surface tackiness as compared with that of Comparative Example 1 where 100 parts by weight of a reaction product (DOMINUS K550F) of a polyol-containing vinyl chloride polymer with an isocyanate compound having urethane content

4

of 60% by weight was solely used, that of Comparative Example 2 where 100 parts by weight of a polyvinyl chloride resin having an average polymerization degree of 1000 and comprising 45% by weight of tetrahydrofuran-insoluble polyvinyl chloride gel portion and the remainder of tetrahydrofuran-soluble portion and 110 parts by weight of 2-ethylhexyl phthalate plasticizer were used, and those of Comparative Examples 3-4 where 100 parts by weight of a zero gel portion vinyl chloride resin having an average polymerization degree of 1000 or 1300 and 110 parts by weight of 2-ethylhexyl phthalate were used.

Table 1

| | | Example | | | | | Comparative Example | | | |
|---|---|---|---|---|---|---|---|---|---|---|
| | | 1 | 2 | 3 | 4 | 5 | 1 | 2 | 3 | 4 |
| Composition | K550F *1) | 100 | | | | | 100 | | | |
| | K650F | | 100 | | | | | | | |
| | K700F | | | 100 | | | | | | |
| | K800F | | | | 100 | | | | | |
| | K900F | | | | | 100 | | | | |
| | PVC (P̄1000, gel portion 45%)*2) | 50 | 50 | 50 | 50 | 50 | | 100 | | |
| | PVC (P̄1000, gel portion 0%) *3) | | | | | | | | 100 | |
| | PVC (P̄1300, gel portion 0%) *4) | | | | | | | | | 100 |
| | 2-Ethylhexyl phthalate | 60 | 60 | 60 | 60 | 60 | 0 | 110 | 110 | 110 |
| Characteristics | Hardness | 45 | 50 | 55 | 60 | 70 | 55 | 50 | 50 | 50 |
| | Operability at preparation of pellets | O | O | O | O | O | O | O | O | O |
| | Surface tackiness of molded product | O | O | O | O | O | △ | △ | × | × |

O   Good   △   Somewhat bad   ×   Bad

*1) K550F: Toso Co., Ltd.    DOMINUS K550F: Hardness 55        Urethane content 60 wt.%
    K650F:        "                "        K650F:    "      65              "          50    "
    K700F:        "                "        K700F:    "      70              "          45    "
    K800F:        "                "        K800F:    "      80              "          40    "
    K900F:        "                "        K900F:    "      90              "          30    "
*2) PVC (P̄1000, gel portion 45%) manufactured by Sumitomo Chemical Co., Ltd.
*3) PVC (P̄1000, gel portion 0%):  TH1000 manufactured by Toso Co., Ltd.
*4) PVC (P̄1300, gel portion 0%):  TH1300                    "

Examples 6-9 and Comparative Examples 5-10

As shown in Table 2, to 100 parts by weight of a reaction product (DOMINUS K650F) of a polyol-containing vinyl chloride polymer with an isocyanate compound having urethane content of about 50% by weight were added 50 or 200 parts by weight of a vinyl chloride resin of 1000 or 1800 in average polymerization degree which comprises 45% or 35% of tetrahydrofuran-insoluble polyvinyl chloride gel portion and the remainder of tetrahydrofuran-soluble portion, 60 or 165 parts by weight of a plasticizer and 2 parts by weight of a Ba-Zn type heat stabilizer (Rup-14 manufactured by Adeka Argus Co.), and the mixture was kneaded by roll at a roll temperature of 130°C to make pellets. Production of samples and evaluation of characteristics of the samples were conducted in the same manner as in Examples 1-5. As shown in Table 2, molded products obtained in Examples 6-9 where the compositions of the present invention were used, were less in surface tackiness as compared with those of Comparative Examples 5-6 where vinyl chloride resin containing gel portion in an amount less than 8-90% by weight specified in the present invention was used, and those of Comparative Examples 7-10 where amount of vinyl chloride resins used was outside the range of 10-300 parts by weight specified in the present invention.

Table 2

| | | Example | | | | Comparative Example | | | | | |
| --- | --- | --- | --- | --- | --- | --- | --- | --- | --- | --- | --- |
| | | 6 | 7 | 8 | 9 | 5 | 6 | 7 | 8 | 9 | 10 |
| Composition | K650F | 100 | 100 | 100 | 100 | 100 | 100 | 100 | 100 | 100 | 100 |
| | PVC ($\bar{P}$1000, gel portion 45%) | 50 | 200 | | | | | | | | |
| | PVC ($\bar{P}$1800, gel portion 35%)*5) | | | 50 | 200 | | | 5 | 400 | | |
| | PVC ($\bar{P}$5000, gel portion 5%) *6) | | | | | 50 | 200 | | | 5 | 400 |
| | 2-Ethylhexyl phthalate | 60 | 165 | 60 | 165 | 60 | 165 | 15 | 200 | 15 | 200 |
| Characteristics | Hardness | 50 | 50 | 50 | 50 | 50 | 50 | 50 | 75 | 50 | 75 |
| | Operability at preparation of pellets | ○ | ○ | ○ | ○ | ○ | ○ | ○ | ○ | ○ | ○ |
| | Surface tackiness of molded product | ○ | ○ | ○ | ○ | △ | △ | △ | △ | △ | △ |

*5) PVC ($\bar{P}$1800, gel portion 35%) manufactured by Sumitomo Chemical Co., Ltd.

*6) PVC ($\bar{P}$5000, gel portion 5%)                "

Examples 10-12 and Comparative Examples 11-12

To 100 parts by weight of a reaction product of a polyol-containing vinyl chloride polymer with an isocyanate compound having a urethane content of about 50% by weight were added 50 parts by weight of a vinyl chloride resin of 1000 in average polymerization degree which comprises 45% of tetrahydrofuran-

8

insoluble polyvinyl chloride gel portion and the remainder of tetrahydrofuran-soluble portion, 50, 100 or 200 parts by weight of 2-ethylhexyl phthalate plasticizer and 2 parts by weight of a Ba-Zn type heat stabilizer (Rup-14 manufactured by Adeka Argus Co.), and the mixture was kneaded by roll at a roll temperature of 130°C to make pellets. Production of samples and evaluation of characteristics of the samples were conducted in the same manner as in Examples 1-5. As shown in Table 3, molded products obtained in Examples 10-12 where the compositions of the present invention were used, were less in surface tackiness as compared with those obtained in Comparative Examples 11-12 where 2-ethylhexyl phthalate plasticizer was added in an amount of 250 or 300 parts by weight.

Table 3

| | | Example | | | Comparative Example | |
|---|---|---|---|---|---|---|
| | | 10 | 11 | 12 | 11 | 12 |
| Composition | K650F | 100 | 100 | 100 | 100 | 100 |
| | PVC (P̄1000, gel portion 45%) | 50 | 50 | 50 | 50 | 50 |
| | 2-Ethylhexyl phthalate | 50 | 100 | 200 | 250 | 300 |
| Characteristics | Hardness | 55 | 35 | 20 | 15 | 10 |
| | Operability at preparation of pellets | O | O | O | X | X |
| | Surface tackiness of molded product | O | O | O | X | X |

## Claims

1. A vinyl chloride resin composition comprising 100 parts by weight of the reaction product of a polyol-containing vinyl chloride polymer with an isocyanate compound, the urethane content in the reaction product being 30 to 60% by weight, 10 to 300 parts by weight of a vinyl chloride resin having 8 to 90% by weight of tetrahydrofuran-insoluble polyvinyl chloride gel portion, the remainder being tetrahydrofuran-soluble, and 0 to 200 parts by weight of a plasticizer.

2. A composition according to claim 1, wherein the polyol is a short-chain polyol selected from aliphatic, alicyclic, aromatic, and heterocyclic dihydroxy, trihydroxy and tetrahydroxy compounds or a long-chain polyol selected from polyester polyols, polyether polyols, polycarbonate polyols, vinyl polyols, diene polyols, castor oil polyols, silicone polyols, polyolefin polyols and copolymers thereof.

3. A composition according to claim 1 or claim 2, wherein the vinyl chloride polymer is a vinyl chloride homopolymer or a copolymer having vinyl chloride as a main component and a monomer copolymerizable therewith.

4. A composition according to claim 3, wherein the monomer copolymerizable with vinyl chloride is selected from vinylidene compounds, acrylic esters, methacrylic esters, styrene compounds, vinyl compounds other than vinyl chloride, and alkadienes.

5. A composition according to any one of claims 1 to 4, wherein the isocyanate compound is selected from diisocyanate compounds, triisocyanate compounds, dimers and trimers of these isocyanate compounds, and polyisocyanate compounds obtained by reaction of these isocyanate compounds with active hydrogen compounds.

6. A composition according to any one of claims 1 to 5, wherein the vinyl chloride resin is a vinyl chloride homopolymer or a copolymer having vinyl chloride as a main component and a monomer copolymerizable therewith.

7. A composition according to claim 6, wherein the monomer copolymerizable with vinyl chloride is selected from fatty acid vinyl esters, vinylidene halides, alkyl acrylates and methacrylates, acrylonitrile, alkylvinyl ethers, and styrene and derivatives thereof.

8. A composition according to any one of claims 1 to 7, wherein the plasticizer is present and is selected from alkyl esters of aromatic and aliphatic polybasic acids, aryl esters of phosphoric acid, and polyesters.

9. A composition according to any one of claims 1 to 8, which additionally contains an additive selected from the group of other thermoplastic resins, rubbers, heat stabilizers, fillers, pigments and processing aids.

10. A shaped structure formed from a composition as defined in any one of claims 1 to 9, or the use of a composition as claimed in any one of claims 1 to 9 to produce a shaped structure having a low surface tackiness.

**Patentansprüche**

1. Vinylchloridharzzusammensetzung, umfassend 100 Gew.-Teile des Reaktionsproduktes von Polyol enthaltendem Vinylchloridpolymer mit einer Isocyanatverbindung, wobei der Urethananteil in dem Reaktionsprodukt 30 bis 60 Gew.-% beträgt, 10 bis 300 Gew.-Teile eines Vinylchloridharzes mit einem Gelanteil an in Tetrahydrofuran unlöslichem Polyvinylchlorid von 8 bis 90 Gew.-%, wobei der Rest in Tetrahydrofuran löslich ist, und 0 bis 200 Gew.-Teile eines Weichmachers.

2. Zusammensetzung nach Anspruch 1, wobei das Polyol ein kurzkettiges Polyol, ausgewählt aus aliphatischen, alicyclischen, aromatischen und heterocyclischen Dihydroxy-, Trihydroxy- und Tetrahydroxy-Verbindungen oder ein langkettiges Polyol, ausgewählt aus Polyesterpolyolen, Polyetherpolyolen, Polycarbonatpolyolen, Vinylpolyolen, Dienpolyolen, Rizinusölpolyolen, Silikonpolyolen, Polyolefinpolyolen und Copolymeren davon ist.

3. Zusammensetzung nach Anspruch 1 oder Anspruch 2, wobei das Vinylchloridpolymer ein Vinylchloridhomopolymer oder ein Copolymer mit Vinylchlorid als Hauptbestandteil und einem Monomer, das damit copolymerisierbar ist, ist.

**4.** Zusammensetzung nach Anspruch 3, wobei das mit Vinylchlorid copolymerisierbare Monomer ausgewählt ist aus Vinylidenverbindungen, Acrylestern, Methacrylestern, Styrolverbindungen, Vinylverbindungen, die von Vinylchlorid verschieden sind, und Alkandienen.

**5.** Zusammensetzung nach einem der Ansprüche 1 bis 4, wobei die Isocyanatverbindung ausgewählt ist aus Diisocyanatverbindungen, Triisocyanatverbindungen, Dimeren und Trimeren dieser Isocyanatverbindungen und Polyisocyanatverbindungen, erhalten durch die Umsetzung dieser Isocyanatverbindungen mit aktiven Wasserstoff enthaltenden Verbindungen.

**6.** Zusammensetzung nach einem der Ansprüche 1 bis 5, wobei das Vinylchloridharz ein Vinylchloridhomopolymer oder ein Copolymer mit Vinylchlorid als Hauptkomponente und einem damit copolymerisierbaren Monomer ist.

**7.** Zusammensetzung nach Anspruch 6, wobei das mit Vinylchlorid copolymerisierbare Monomer ausgewählt ist aus Fettsäurevinylestern, Vinylidenhalogeniden, Acrylsäurealkylestern und Methacrylsäurealkylestern, Acrylnitril, Alkylvinylethern und Styrol und Derivaten davon.

**8.** Zusammensetzung nach einem der Ansprüche 1 bis 7, wobei der Weichmacher vorliegt und ausgewählt ist aus Alkylestern von aromatischen und aliphatischen mehrbasigen Säuren, Arylestern von Phosphorsäure und Polyestern.

**9.** Zusammensetzung nach einem der Ansprüche 1 bis 8, zusätzlich enthaltend ein Additiv, ausgewählt aus der Gruppe anderer thermoplastischer Harze, Kautschuke, Hitzestabilisatoren, Füllstoffe, Pigmente und Verarbeitungshilfen.

**10.** Geformte Struktur, hergestellt aus einer Zusammensetzung nach einem der Ansprüche 1 bis 9 oder die Verwendung einer Zusammensetzung nach einem der Ansprüche 1 bis 9 zur Herstellung einer geformten Struktur mit geringer Oberflächenklebrigkeit.

**Revendications**

**1.** Composition de résine de chlorure de vinyle comprenant 100 parties en poids du produit réactionnel d'un polymère de chlorure de vinyle contenant un polyol avec un isocyanate, la teneur en uréthanne du produit réactionnel étant de 30 à 60 % en poids, 10 à 300 parties en poids d'une résine de chlorure de vinyle ayant une portion de gel de chlorure de polyvinyle insoluble dans le tétrahydrofuranne de 8 à 90 % en poids, le reste étant soluble dans le tétrahydrofuranne, et 0 à 200 parties en poids d'un plastifiant.

**2.** Composition selon la revendication 1, dans laquelle le polyol est un polyol à chaîne courte choisi parmi les composés dihydroxylés, trihydroxylés ou tétrahydroxylés aliphatiques, alicycliques, aromatiques et hétérocycliques ou un polyol à chaîne longue choisi parmi les polyester-polyols, les polyéther-polyols, les polycarbonate-polyols, les polyols vinyliques, les diènepolyols, les polyols d'huile de ricin, les silicone-polyols, les polyols polyoléfiniques et leurs copolymères.

**3.** Composition selon la revendication 1 ou la revendication 2, dans laquelle le polymère de chlorure de vinyle est un homopolymère de chlorure de vinyle ou un copolymère contenant du chlorure de vinyle comme principal constituant et un monomère copolymérisable avec lui.

**4.** Composition selon la revendication 3, dans laquelle le monomère copolymérisable avec le chlorure de vinyle est choisi parmi les composés de vinylidène, les esters acryliques, les esters méthacryliques, les composés styréniques, les composés vinyliques autres que le chlorure de vinyle, et les alcadiènes.

**5.** Composition selon l'une quelconque des revendications 1 à 4, dans laquelle l'isocyanate est choisi parmi les diisocyanates, les triisocyanates, les dimères et trimères de ces isocyanates, et les polyisocyanates obtenus par la réaction de ces isocyanates avec des composés contenant des atomes d'hydrogène actifs.

6. Composition selon l'une quelconque des revendications 1 à 5, dans laquelle la résine de chlorure de vinyle est un homopolymère de chlorure de vinyle ou un copolymère contenant du chlorure de vinyle comme principal constituant et un monomère copolymérisable avec lui.

7. Composition selon la revendication 6, dans laquelle le monomère copolymérisable avec le chlorure de vinyle est choisi parmi les esters vinyliques d'acides gras, les halogénures de vinylidène, les acrylates et méthacrylates d'alkyle, l'acrylonitrile, les éthers d'alkyle et de vinyle, et le styrène et ses dérivés.

8. Composition selon l'une quelconque des revendications 1 à 7, dans laquelle le plastifiant est présent et est choisi parmi les esters alkyliques de polyacides aromatiques et aliphatiques, les esters aryliques d'acide phosphorique et les polyesters.

9. Composition selon l'une quelconque des revendications 1 à 8, qui contient de plus un additif choisi dans le groupe formé par les autres résines thermoplastiques, les caoutchoucs, les stabilisants à la chaleur, les charges, les pigments et les adjuvants de transformation.

10. Une structure façonnée formée à partir d'une composition telle que définie dans l'une quelconque des revendications 1 à 9, ou l'utilisation d'une composition telle que revendiquée dans l'une quelconque des revendications 1 à 9 pour produire une structure façonnée ayant une faible adhésivité superficielle.